(19) Europäisches Patentamt / European Patent Office / Office européen des brevets

(11) **EP 1 768 289 A1**

(12) **EUROPEAN PATENT APPLICATION**
published in accordance with Art. 158(3) EPC

(43) Date of publication:
**28.03.2007 Bulletin 2007/13**

(51) Int Cl.:
***H04J 11/00*** (2006.01)

(21) Application number: **05751514.0**

(22) Date of filing: **15.06.2005**

(86) International application number:
**PCT/JP2005/010938**

(87) International publication number:
**WO 2005/125071 (29.12.2005 Gazette 2005/52)**

(84) Designated Contracting States:
**DE FR GB**

(30) Priority: **17.06.2004 JP 2004179615**

(71) Applicant: **Pioneer Corporation**
**Tokyo 153-8654 (JP)**

(72) Inventor: **YAJIMA, Kiyoshi,**
**PIONEER CORPORATION**
**Tsurugashima-shi,**
**Saitama 3502288 (JP)**

(74) Representative: **Skuhra, Udo**
**Reinhard-Skuhra-Weise & Partner GbR**
**Friedrichstrasse 31**
**80801 München (DE)**

(54) **RECEPTION DEVICE AND RECEPTION METHOD**

(57) A reception device receives a packet signal having a preceding signal for establishing synchronization and a data main body unit containing a particular wave of a particular frequency. The reception device includes: primary correction means for correcting a packet signal frequency error on the time axis according to the preceding signal frequency error; demodulation means for demodulating the packet signal after the primary correction to a demodulated signal; secondary correction means for correcting the frequency error of the demodulated signal on the frequency axis by using the particular wave; and control signal generation means for generating a secondary correction control signal as an index of the execution frequency of the secondary correction in accordance with the irregularities of the frequency error of the preceding signal. In the secondary correction means, the execution frequency of the secondary correction can be varied according to the generated secondary correction control signal.

[FIG. 1]

**EP 1 768 289 A1**

## Description

Technical Field

The present invention relates to a receiving apparatus for and a receiving method of receiving a packet signal based on an OFDM (Orthogonal Frequency Division Multiplexing) modulation method or the like, for example.

Background Art

In this type of receiving apparatus, in synchronization establishment when the packet signal is received, a process of correcting a signal frequency error is performed. If this process is digitally performed, since it has a high operation amount or calculation amount, it is necessary to increase its operation speed. Thus, it is designed to reduce the calculation amount and a memory amount.

For example, according to the technology described in a patent document 1 or a patent document 2, it is designed to reduce the memory amount of storing a table for a correction signal, used in a first correction process, by contriving a signal processing method on the premise that an absolute phase error that remains through the first correction process out of the two-stage processes of frequency error correction is corrected in the second correction process.

Patent document 1: Japanese Patent Application Laying Open NO. 2001-223662
Patent document 2: Japanese Patent Application Laying Open NO. 2003-333009

Disclosure of Invention

Subject to be Solved by the Invention

However, in the present circumstances, it is desired to further speed up the process, through the reduction in the calculation amount and the memory amount.

In order to solve the above-mentioned conventional problem, it is therefore an object of the present invention to provide a receiving apparatus and a receiving method capable of efficiently correcting the frequency error of a received signal.

Means for Solving the Object

(Receiving Apparatus)

The above object of the present invention can be achieved by a receiving apparatus for receiving a packet signal having a precedent signal for synchronization establishment and a data body portion, which follows the precedent signal, in which data is carried by a carrier wave, and which includes a particular wave with a particular frequency, the receiving apparatus provided with: a first correcting device for performing first correction on the packet signal, the first correction correcting a frequency error on a time axis on the basis of a frequency error of the precedent signal; a demodulating device for demodulating the packet signal on which the first correction is performed, to a demodulated signal on a frequency axis, in each carrier wave; a second correcting device for performing second correction on the demodulated signal, the second correction correcting a frequency error on a frequency axis by using the particular wave; and a control signal generating device for generating a second correction control signal, which is an index of execution frequency of the second correction, in accordance with scattering of the frequency error of the precedent signal, the second correcting device making the execution frequency of the second correction variable, on the basis of the generated second correction control signal.

According to the receiving apparatus of the present invention, in the synchronization establishment of a received signal, two stages of frequency error correction is performed. Namely, when the received packet signal is demodulated, the first correction using the precedent signal for synchronization establishment and the second correction using the particular signal component and its reference signal are performed on the frequency error of the received signal. The precedent signal for synchronization establishment is a signal given to each independent packet, and it corresponds to a signal referred to as a preamble signal, generally. The receiving apparatus of the present invention is applied to an OFDM signal and a signal based on CDMA (Code Division Multiple Access) or the like, if the received signal is provided with: the precedent signal; and the packet including the carrier wave (carrier) for carrying data and the particular wave with the predetermined frequency in the data body portion following the precedent signal.

In the first correction, the frequency error of the packet signal is corrected on the time axis on the basis of the frequency error of the precedent signal. After the first correction, the signal is demodulated. In the second correction, the frequency error of the demodulated signal is corrected on the frequency axis by using the particular wave, such as a pilot carrier. The second correction is performed on the signal whose frequency is coarsely adjusted in the first correction, in order to further increase the correction accuracy; however, it may be actually omitted if the first correction is sufficient. Thus, the receiving apparatus of the present invention is constructed to change the execution frequency of the second correction, depending on the scattering of the frequency error in the precedent signal used in the first correction.

Namely, on the control signal generating device, the index value of the execution frequency is obtained, which indicates how often the second correction is performed on the carried data. The index value of the execution frequency is transmitted to the controlling device in a form of the second correction control signal. The controlling device dynamically changes the second correction frequency on the basis of the second correction control signal.

The "scattering of the frequency error" herein means an index value indicating the "extent of the scattering" of the frequency error in the first correction, and specifically, it can be detected as a statistical variance or an error value range or the like. However, the "scattering" is not always detected, and it may be not necessarily obtained from the frequency error itself. For example, even in the case of calculated values derived from the operation or calculation of the frequency error, if they have a correspondence relationship with the frequency error, they can be used as the indirectly obtained "scattering of the frequency error".

Moreover, the expression of "making the execution frequency variable" means that it is constructed such that the execution frequency is directly or indirectly changed in accordance with the second correction control signal, and a method of embodying such construction is not particularly taken up. Its specific example includes a case where the operation of the second correcting device is controlled by some controlling device or directly controlled by the second correction control signal, and moreover, a case where not the second correcting device but a signal input route for the second correcting device is controlled, or the like, Incidentally, the expression "variable" in this case includes not only a case of changing the extent of the execution frequency but also a case of not performing.

As described above, by making the execution frequency of the second correction variable in accordance with the frequency error in the first correction, it is possible to perform the second correction, only if needed, to thereby allow the efficient correction process. Incidentally, according to the scattering of the frequency error of the precedent signal, it is possible to identify the occurrence of Doppler phasing in the received signal.

In one aspect of the receiving apparatus of the present invention, it is further provided with a controlling device for controlling the second correcting device so as to make the execution frequency of the second correction variable on the basis of the generated second correction control signal.

According to this aspect, the second correcting device is controlled by the controlling device about the execution frequency. In this case, the operation is controlled by the controlling device, so that such a possibility that the second correcting device malfunctions, such as performing the second correction in timing not to control and outputting the signal through the correction, is prevented, and thus it is possible to perform the proper correction process.

In another aspect of the receiving apparatus of the present invention, it is further provided with: a switch device for outputting the demodulated signal through the second correcting device or not through the second correcting device, selectively; and a controlling device for controlling the switch device so as to make the execution frequency of the second correction variable on the basis of the generated second correction control signal.

According to this aspect, whether or not the second correcting device substantially corrects the demodulated signal is determined by the operation of the switch device for changing the route of the demodulated signal so as to input it to the second correcting device or bypass the second correcting device. Then, by that the controlling device controls the change timing of the switch device, the timing that the demodulated signal is inputted to the second correcting device, i.e. the execution frequency of the second correction, is controlled. In this case, the signal is not inputted in timing not to correct, so that such a possibility that the second correcting device malfunctions is prevented, and thus it is possible to perform the proper correction process.

In another aspect of the receiving apparatus of the present invention, the control signal controlling device includes a detecting device for detecting scattering of the frequency error and generates the second correction control signal in accordance with the detected scattering.

According to this aspect, the scattering of the frequency error is detected on the basis of the frequency error in the first correction, on the detecting device of the control signal generating device. Specifically, it is detected as a statistical variance or an error value range or the like. The second correction control signal is generated in accordance with the detection result. Thus, it is possible to obtain the index of the execution frequency of the second correction, simply and certainly.

In another aspect of the receiving apparatus of the present invention, the first correcting device calculates a plurality of multiplied data from complex multiplication of the precedent signal and a delay signal obtained by delaying the precedent signal, obtains an average value of a data row, cut by a time window with a length corresponding to m data (wherein m is a natural number), out of the plurality of multiplied data, and detects the frequency error on the basis of the average value, and the control signal generating device obtains an average value of data, cut by a time window with a length corresponding to n data (wherein n is a natural number), out of the plurality of multiplied data, and detects scattering of the average value as scattering of the frequency error.

According to this aspect, if the plurality of multiplied data obtained on the first correcting device are inputted, the control signal generating device obtains the average value of the data, cut by the time window, and further obtains the scattering of the average value. In the end, it generates the second correction control signal in accordance with the scattering of the average value.

On the other hand, in the first correction, the frequency error is detected by using the autocorrelation of the precedent signal transmitted in each packet. The autocorrelation value calculated in this process is obtained by averaging the multiplied data in the predetermined time window. Namely, in this case, it is constructed such that the first correcting device and the control signal generating device separately perform the averaging process on the same multiplied data. The size (data length) of the time window adopted by each device may be the same, but it can be set independently of each other.

In order to obtain a proper error correction amount in the first correction, it is necessary to obtain the frequency error in a relatively long duration, and the number of data to be averaged (i.e. the value of m) is preferably large. In contrast, in order to accurately observe the extent of scattering in the frequency error, it is necessary to obtain the frequency error in a relatively short duration, and the number of data to be averaged (i.e. the value of n) is preferably small.

Therefore, if it is designed such that the first correcting device and the control signal generating device have different condition setting of the averaging process, in accordance with their processing purpose, it is possible to accurately perform the first correction and the control of the second correction frequency.

In another aspect of the receiving apparatus of the present invention, the first correcting device calculates a plurality of multiplied data from complex multiplication of the precedent signal and a delay signal obtained by delaying the precedent signal, obtains an average value of a data row, cut by a time window with a length corresponding to m data (wherein m is a natural number), out of the plurality of multiplied data, and detects the frequency error on the basis of the average value, and the control signal generating device detects scattering of the average value as scattering of the frequency error.

According to this aspect, the control signal generating device obtains the scattering of the average value obtained on the first correcting device, and generates the second correction control signal from this calculation result.

In this case, the autocorrelation value of the precedent signal calculated on the first correcting device (i.e. the value obtained by averaging the multiplied data in the time window corresponding to m data) is inputted to the control signal generating device. Then, in accordance with the scattering of the inputted average value, the second correction control signal is generated. Thus, a circuit related to the averaging process is shared by the first correcting device and the control signal generating device, so that it is possible to reduce the circuit scale.

In another aspect of the receiving apparatus of the present invention, the control signal generating device detects scattering of the frequency error, on the basis of a signal length of the received packet signal.

According to this aspect, the second correction frequency is controlled by further using the signal length of the packet mode signal as an index. Thus, it is possible to control the second correction frequency, more efficiently.

(Receiving Method)

The above object of the present invention can be also achieved by a receiving method of receiving a packet signal having a precedent signal for synchronization establishment and a data body portion, which follows the precedent signal, in which data is carried by a carrier wave, and which includes a particular wave with a particular frequency, the receiving method provided with: a first correcting process of performing first correction on the packet signal, the first correction correcting a frequency error on a time axis on the basis of a frequency error of the precedent signal; a demodulating process of demodulating the packet signal on which the first correction is performed, to a demodulated signal on a frequency axis, in each carrier wave; a second correcting process of performing second correction on the demodulated signal, the second correction correcting a frequency error on a frequency axis by using the particular wave; and a control signal generating process of generating a second correction control signal, which is an index of execution frequency of the second correction, in accordance with scattering of the frequency error of the precedent signal, the second correcting process making the execution frequency of the second correction variable, on the basis of the generated second correction control signal.

The receiving method of the present invention also has the same operation and effects as those of the above-mentioned receiving apparatus of the present invention.

As explained above, according to the receiving apparatus of the present invention, it is provided with: the first correcting device; the second correcting device; and the control signal generating device. Thus, it is possible to efficiently correct the frequency error of the received packet signal, thereby allowing the effective use of resources and the electric power saving of the second correcting device or the receiving apparatus.

Brief Description of Drawings

[FIG. 1] FIG. 1 is a block diagram showing one configuration example of the major portion of a receiving apparatus in an embodiment of the present invention.

[FIG. 2] FIG. 2 is a diagram showing the packet structure of an OFDM signal inputted to the receiving apparatus in the embodiment.

[FIG. 3] FIG. 3 is a diagram showing the sub carrier arrangement of the OFDM signal inputted to the receiving apparatus in the embodiment.

[FIG. 4] FIG. 4 is a block diagram showing one example of a scattering calculation circuit of the receiving apparatus in the embodiment.

[FIG. 5] FIG. 5 is a conceptual view showing the structure of a table for generating a second correction control signal in the scattering calculation circuit of the receiving apparatus in the embodiment.
[FIG. 6] FIG. 6 is a flowchart showing an operational procedure of the receiving apparatus in the embodiment.
[FIG. 7] FIG. 7 is a block diagram showing a modified example of the scattering calculation circuit in the embodiment.

Description of Reference Codes

100...first correction device, 10...delay circuit, 11...sign inversion circuit, 12...complex multiplication circuit, 13, 16...scattering calculation circuit, 13a...N sample averaging circuit, 13b...scattering checker, 13c...M sample averaging circuit, 13d...optimal value selection circuit, 113...table (for generating a second correction control signal), 14...correction signal memory, 15...multiplier, 30...TFT circuit, 200...second correction device, 20...complex multiplication circuit, 21...reference signal memory, 22...sign inversion circuit, 23...averaging circuit, 24...complex multiplication circuit, 25...sign inversion circuit, 40...controller, 41, 42...switch, SI, SQ...sample data, $\Delta I$, $\Delta Q \square$ frequency error, S2... second correction control signal.

Hereinafter, the best mode for carrying out the present invention will be discussed by giving an embodiment, with reference to the drawings.

(Embodiment)

Hereinafter, the embodiment of the present invention will be explained with reference to the drawings.

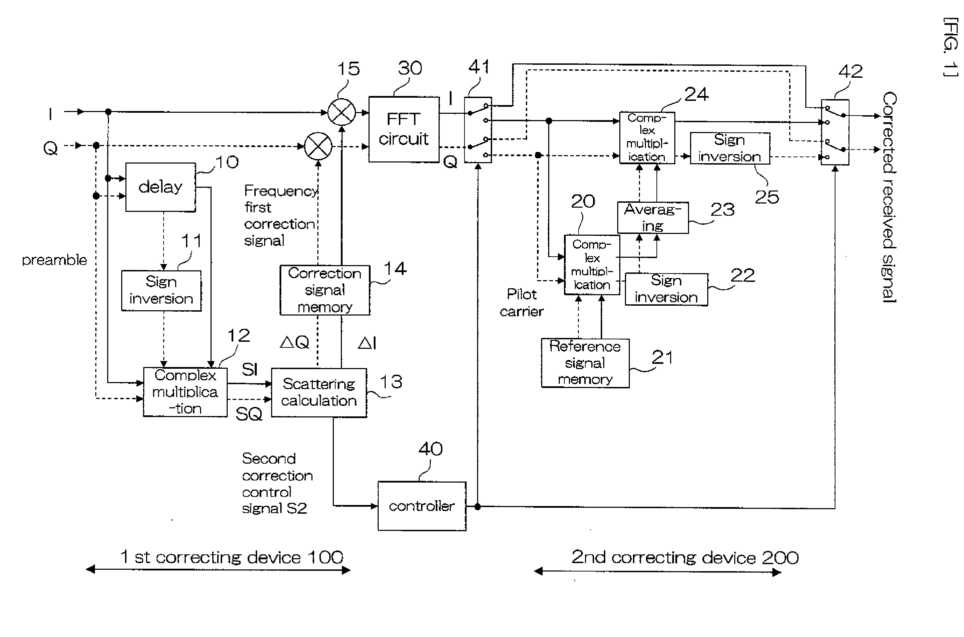

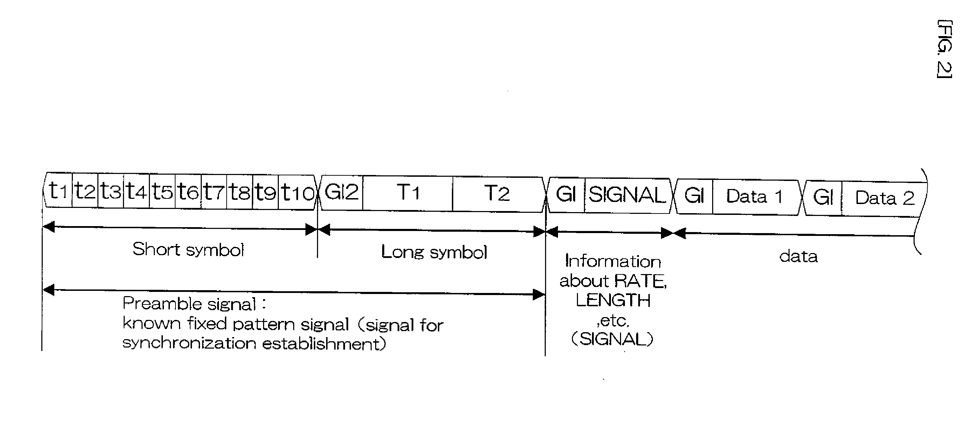

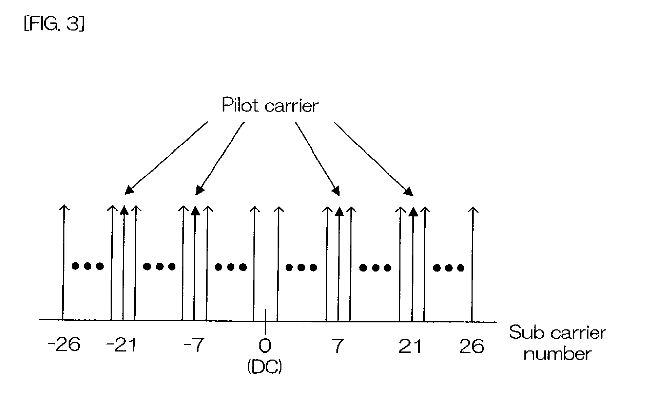

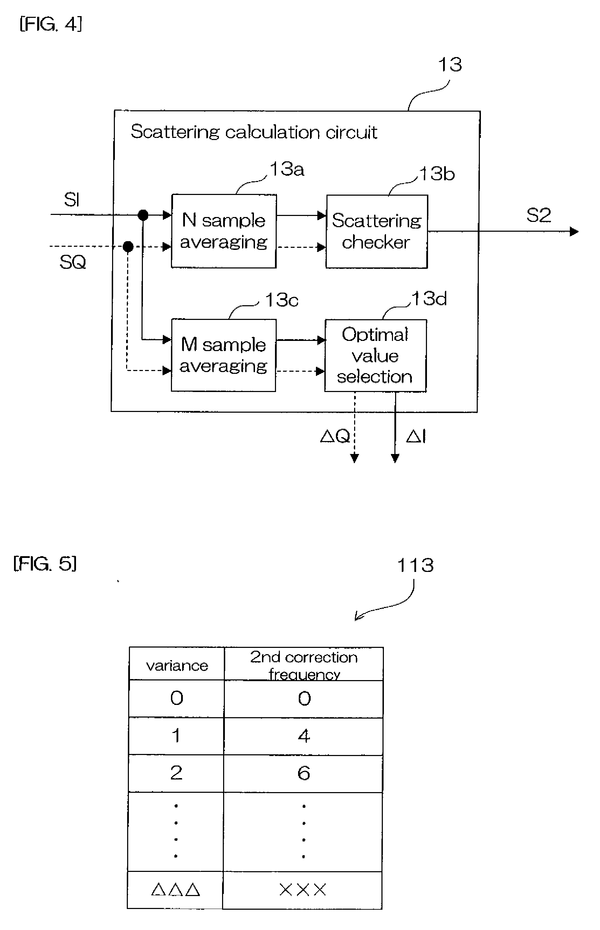

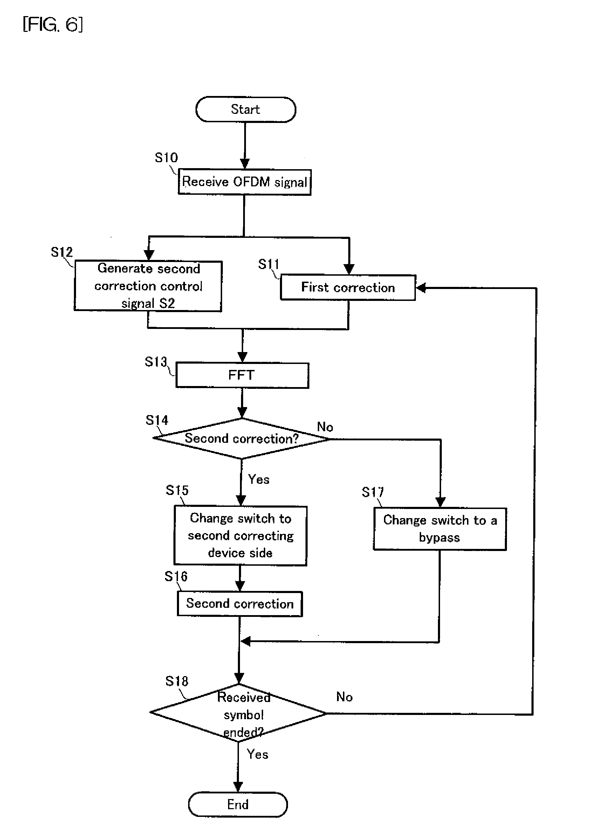

The embodiment of the present invention will be explained with reference to FIG. 1 to FIG. 5. FIG. 1 shows the structure of the major portion of a receiving apparatus in the embodiment. FIG. 2 shows the structure on a time axis of an OFDM signal received on the receiving apparatus. FIG. 3 shows the structure on a frequency axis of the OFDM signal. FIG. 4 shows the structure of a scattering calculation circuit of a circuit for frequency error correction. FIG. 5 shows a table for generating a second correction control signal in the scattering calculation circuit.

(Structure of Receiving Apparatus)

The receiving apparatus in the embodiment is constructed to have a function of demodulating a received signal to data and to perform a synchronization process of synchronizing the received signal in the demodulation. The receiving apparatus adopts an OFDM modulation method, such as IEEE802.11a and HIPERLAN/2, for example, and it is applied to a communication technology aimed at a packet signal having a preamble signal for synchronization establishment and a follow-on payload portion (packet payload portion) including a pilot carrier with a particular frequency, as a data body portion.

In FIG. 1, the receiving apparatus includes a first correction device 100 and a second correction device 200 for correcting a frequency error, and it is constructed to perform the correction at two stages, which are first correction and second correction. The second correction is performed on a signal whose frequency is coarsely adjusted in the first correction, in order to further increase the correction accuracy; however, it may be actually omitted if the first correction is sufficient. Moreover, at the subsequent stage of the first correction device 100 and at the previous stage of the second correction device 200, there is provided a FFT (Fast Fourier Transform) circuit 30, as one example of the "demodulating device" of the present invention. Moreover, a controller 40 is provided to perform the operational control of the entire apparatus. At the same time, here, the controller 40 has also a function of controlling the operation frequency of the second correction device 200 on the basis of a second correction control signal S2, as one example of the "controlling device" of the present invention.

As shown in FIG. 2, one packet of the OFDM signal is provided with: a preamble signal; SIGNAL; and data (data 1, data 2, and so on), for example. The preamble signal has a known fixed pattern used for synchronization establishment, wherein a short symbol and a long symbol are defined. The short symbol and the long symbol are used, not only for the frequency error correction but also for the signal gain setting and channel estimation or the like, respectively for example. Namely, in the embodiment, the preamble signal corresponds to one specific example of the "precedent signal" of the present invention. The SIGNAL is a field indicating information about a transmission rate, data amount to be transmitted, or the like. In the head of each packet, there is given a guard interval GI in which the last part of the symbol (a predetermined data unit carried by one carrier wave) is copied. By this, signal deterioration caused by the interference between the symbols is prevented.

The first correction device 100 has a function of correcting a relative phase error by a symbol unit based on the frequency error of the preamble signal, as the first correction with respect to the received OFDM signal. The first correction device 100 includes: a delay circuit 10; a sign inversion circuit 11; a complex multiplication circuit 12; a scattering calculation circuit 13; a correction signal memory 14; and a multiplier 15. The complex multiplication circuit 12 is constructed to perform complex multiplication of the preamble signal and its delay signal, and output sample data SI and SQ in association with an in-phase I component and a quadrature Q component, as the calculation result. The scattering calculation circuit 13 is constructed to output frequency errors $\Delta I$ and $\Delta Q$ of the preamble signal, and simultaneously output the second correction control signal S2. The correction signal memory 14 has a table on which a correction signal for first correction based on the frequency errors $\Delta I$ and $\Delta Q$ is recorded in advance.

The FFT circuit 30 is constructed to expand the OFDM signal on which the first correction is performed, to a frequency component in each sub carrier. Namely, it has a basic function of demodulating the OFDM signal.

The second correction device 200 is disposed at the subsequent stage of the FFT circuit 30, and it has a function of correcting the remaining phase error in each symbol by using the pilot carrier, as the second correction. The pilot carrier, as one specific example of the "particular wave" of the present invention, is distributed at a particular frequency in constant intervals, for example, independently of the sub carrier, which is the carrier wave (carrier) of the data, on a signal which is frequency-converted in each symbol, as shown in FIG. 3. Incidentally, the second correction device 200 is provided with: a complex multiplication circuit 20; a reference signal memory 21; a sign inversion circuit 22; an averaging circuit 23; a complex multiplication circuit 24; and a sign inversion circuit 25.

In the first correction device 100 in the embodiment, scattering with respect to the output value of the complex multiplication circuit 12 is detected on the scattering calculation circuit 13, and the second correction control signal S2, which is the index of execution frequency of the second correction, is generated in accordance with the detected scattering.

In FIG. 4, the scattering calculation circuit 13 is provided with: an N sample averaging circuit 13a, used for generating the second correction control signal S2; a scattering checker 13b; an M sample averaging circuit 13c, used for generating the correction signals ΔI and ΔQ of the first correction; and an optimal value selection circuit 13d.

The N sample averaging circuit 13a is constructed to obtain the average value of data, cut by a time window with a length corresponding to N data, out of a plurality of data outputted from the complex multiplication circuit 12.

The scattering checker 13b is constructed to temporarily store the output of the N sample averaging circuit 13a into a memory and obtain the scattering as a variance (σ in equation 1) based on the following equation 1, for example.

$$\sigma = \Sigma(xi - X)^2/(n-1) \qquad ...(1)$$

(wherein, i=1 to n, xi is an individual average value, X is the mean value of xi, n is the number of data)

Here, second correction frequency is determined from the variance by using a table 113 (refer to FIG. 5) on which the variance and the second correction frequency are associated, and this correction frequency information is transmitted to the controller 40. Incidentally, the N sample averaging circuit 13a and the scattering checker 13b correspond to one specific example of the "control signal generating device" of the present invention.

The M sample averaging circuit 13c is constructed to obtain the average value of data, cut by a time window with a length corresponding to M data, out of the plurality of data outputted from the complex multiplication circuit 12. Incidentally, the values of N and M are set in advance. These values are set independently of each other, and they are not necessarily the same. However, on the M sample averaging circuit 13c, it is necessary to obtain the frequency error in a relatively long duration in order to obtain a proper error correction amount in the first correction. In order to do so, it is preferable to increase the number of data to be averaged (i.e. the value of m). In contrast, in order to accurately observe the extent of scattering in the frequency error, it is necessary to obtain the frequency error in a relatively short duration. In order to do so, on the N sample averaging circuit 13a, it is preferable to reduce the number of data to be averaged (i.e. the value of n).

The optimal value selection circuit 13d is constructed to eventually select a correction amount (phase variation amount) used for the first correction on the basis of the output of the M sample averaging circuit 13c. The selecting method varies depending on the set value of M (i.e. the number of samples with respect to one average value), but it may be arbitrarily set. For example, it may be set as a median, a last input value out of the many inputted M sample average values, or the like. Moreover, by using the M value as the number of all the samples, the average value of all the data, in which only one value is obtained, may be regarded as the phase variation amount.

(Operation of Receiving Apparatus)

Next, an explanation will be given for the operation of the receiving apparatus in the embodiment, particularly for the process associated with the frequency error correction, with reference to FIG. 1 and the flowchart in FIG. 6. Hereinafter, firstly, the basic correction process will be explained, and secondly, the control of the second correction frequency will be explained.

In FIG. 6, when the packeted OFDM signal is received (step S10), it is transmitted to the circuit for frequency error correction shown in FIG. 1.

Then, the delay circuit 10 of the first correction device 100 delays the preamble signal out of the received signal (the in-phase I component, the quadrature Q component), by 16T (T: sample clock). The sign inversion circuit 11 inverts the sign of the delayed quadrature Q component. Then, the complex multiplication circuit 12 complex-multiplies the in-phase I component of the preamble signal, the quadrature Q component, and the delayed complex conjugate component, and it outputs the sample data SI and SQ. The sample data SI and SQ correspond to the "multiplied data" of the present invention, and correspond to the "phase variation amount corresponding to 16 samples". Moreover, on the scattering calculation circuit 13, the M sample averaging circuit 13c obtains the average value by using the time window for M samples, with respect to the inputted sample data SI and SQ. For example, if M is set to 32, 32 data cut by the time window out of the sample data SI and SQ are added and averaged. The obtained average value is inputted to the optimal value selection circuit 13d, and as their median or the like, the frequency errors (16T of phase rotation amount) ΔI and ΔQ for the preamble signal are obtained. The frequency errors ΔI and ΔQ are outputted to the correction signal memory 14. Then, the correction signal memory 14 extracts and outputs the correction signal corresponding to the frequency errors ΔI and ΔQ. Moreover, on the multiplier 15, the first correction is performed by multiplying the correction signal by the original received signal (step S 11).

In tandem with or in parallel with the execution of the first correction (the step S11), the second correction control signal S2 is generated. Namely, the scattering calculation circuit 13 in the first correction outputs the average value by using the time window for N samples on the N sample averaging circuit 13a, if the sample data SI and SQ are inputted. Namely, the sample data SI and SQ are simultaneously inputted to the N sample averaging circuit 13a and the M sample averaging circuit 13c, and are used for different processes. On the N sample averaging circuit 13a, if N is set to 1, for example, the calculation process is substantially not performed, and the phase variation between the preamble signal and its delay signal is inputted to the scattering checker 13b, as it is. The average value of each of the N samples outputted by the N sample averaging circuit 13a is inputted to and temporarily stored in the scattering checker 13b. Then, the variance of these values is obtained. This variance represents the scattering of the frequency errors ΔI and ΔQ, described later. Namely, it can be said that the larger the variance is, the larger the frequency errors ΔI and ΔQ are. According to the inventors of the present invention, if the frequency errors ΔI and ΔQ are large, it is necessary to increase the number of times of the first correction by that much in order to obtain a certain correction accuracy. In contrast, if the frequency errors ΔI and ΔQ are small, there is a possibility that the second correction is hardly necessary or not necessary at all. Thus, on the scattering checker 13b, the second correction frequency is set in accordance with the extent of the frequency errors ΔI and ΔQ, by using the variance as an index. Specifically, the second correction frequency associated with the obtained variance is extracted by using the table 113. This second correction frequency indicates "by a unit of how many symbols the second correction using the pilot carrier is performed", for example, and it corresponds to the second correction control signal S2. For example, if that value is "n", it is designed to give an instruction to perform the second correction at intervals of (n-1) symbols. In this case, it means that if the value of the table 113 is "1", the correction is performed by a unit of one symbol, and if it is "2", the correction is performed at intervals of one symbol (i.e., every other symbols) "0" may indicate that "the second correction is not performed". As the case of "0", it includes a case where there is only one data of the frequency errors ΔI and ΔQ or its corresponding calculation value, so that it is processed as absence of the scattering. As a result, the second correction control signal S2 is obtained and outputted to the controller 40. As described above, as one example of the second correction control signal, the second correction control signal S2 indicating the frequency of the second correction to be performed next is generated (step S12).

Then, by the FFT circuit 30, the frequency conversion for the OFDM signal on which the first correction is performed is performed by a symbol unit (step S13). Incidentally, the generation of the second correction control signal S2 described above may be performed in parallel with the frequency conversion by the FFT circuit 30.

Then, the controller 40 dynamically controls the execution frequency of the process of the second correction device 200, on the basis of the inputted second correction control signal S2. At this time, the OFDM signal on the frequency axis, converted by the FFT circuit 30 after the first correction, is inputted to the second correction device 200. Here, by the controller 40, it is judged whether or not to perform the second correction in accordance with the content of the second correction control signal S2 (step S14). If it is judged to perform the second correction (the step S14: YES), by changing the switch to the second correction device 200 side (step S 15), the second correction is performed on the second correction device 200 (step S16). Namely, in this case, the phase error remains in the signal through the first correction, so that the second correction is performed. Specifically, a switch 41 and a switch 42 are synchronously controlled in order to perform the second correction in a predetermined cycle of timing. Namely, in the timing of performing the second correction, the switches 41 and 42 select lower-side signal routes, and the output signal from the FFT circuit is inputted to the second correction device 200. The complex multiplication circuit 20 complex-multiplies the pilot carrier inserted to the OFDM signal by the known pilot carrier stored in the reference signal memory 21. The sign inversion circuit 22 inverts the sign of the quadrature Q component, obtained by the complex multiplication. The averaging circuit 23 averages the complex conjugate components obtained in this manner. Moreover, the complex multiplication circuit 24 complex-multiplies the averaged I/Q component signal by the I/Q component signal outputted by the FFT circuit 30. In the end, the sign inversion circuit 25 inverts the sign of the quadrature Q component, to thereby obtain a complex conjugate signal. In this manner, such a signal that the first correction and the second correction are performed on the original signal is obtained.

As opposed to this, if it is judged not to perform the second correction in accordance with the content of the second correction control signal S2 in the step S 14 (the step S14: NO), by changing the switch to the side bypassing the second correction device 200 (step S17), the second correction is not performed on the second correction device 200. Namely, in the timing of not performing the second correction, the switches 41 and 42 select upper-side signal routes, and the output signal from the FFT circuit 30 is outputted, bypassing the second correction device 200.

Then, it is judged whether or not the received symbol is ended (step S 18). If the received symbol is not ended (the step S18: NO), the operational flow returns to the step S11, and the above-mentioned first correction process and the subsequent processes are repeatedly performed (the step S11, the steps S13 to S18). On the other hand, If the received symbol is ended (the step S18: YES), the series of processes is ended.

As explained above, in the embodiment, the N sample averaging circuit 13a and the scattering checker 13b obtain the scattering of the frequency error, by the calculation or operation, as the index of how necessary the second correction is, and determine the second correction frequency in accordance with the calculation result. Moreover, the controller 40 controls the second correction frequency. Thus, it is possible to perform the efficient correction process.

Moreover, it is designed to provide the N sample averaging circuit 13a and the M sample averaging circuit 13c, which separately perform the averaging process on the same sample data SI and SQ. Thus, it is possible to make the condition setting of the averaging process different, in accordance with their processing purpose, and it is possible to accurately perform the first correction and the control of the second correction frequency.

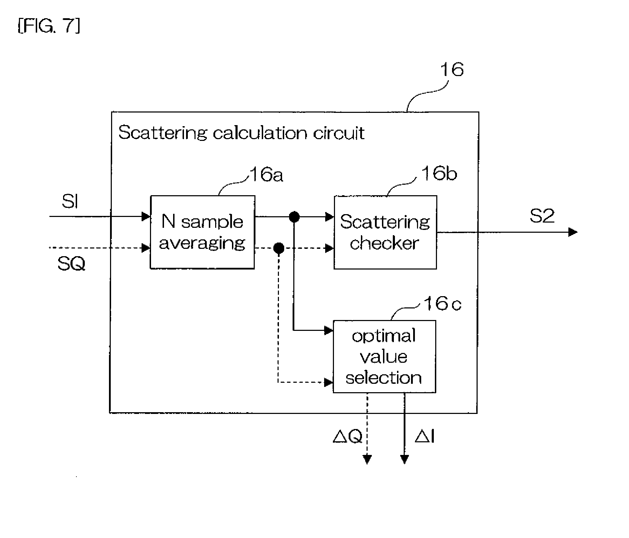

On the other hand, however, the N sample averaging circuit 13a and the M sample averaging circuit 13c may be constructed in the same circuit. FIG. 7 shows a modified example of the scattering calculation circuit in that case.

In FIG. 7, a scattering calculation circuit 16 is provided with: an N sample averaging circuit 16a; a scattering checker 16b; and an optimal value selection circuit 16c. The N sample averaging circuit 16a is shared for the process of the first correction and the control process of the second correction frequency, in order to fulfill the both functions of the N sample averaging circuit 13a and the M sample averaging circuit 13c in the embodiment by only one circuit. Thus, it is possible to reduce the circuit scale.

Incidentally, in the above-mentioned embodiment, only the scattering of the frequency error (i.e. variance) is set as the parameter for determining the second correction frequency; however, other elements may be also added. For example, an OFDM signal length may be inputted to the scattering checker 13b with the variance, and the both may be used to obtain the second correction control signal S2. For example, if the signal length is sufficiently short, it is possible to judge that the first correction is enough even if the second correction is not performed.

Moreover, here, the variance is applied as the scattering, to thereby obtain the second correction control signal S2. In the present invention, however, except for the variance, anything if capable of representing the extent of the scattering of the frequency error can be the index of the control of the second correction frequency. For example, instead of the variance, a range (a difference between a maximum value and minimum value) or the like may be used. If the range is used, the calculation amount is remarkably smaller than using the variance. Moreover, in order to obtain the second correction frequency from the index value (the variance in the embodiment), the table 113 is used. However, other devices or means may be used, such as deriving it from a conversion equation or the like.

Incidentally, the second correction in the embodiment described above is performed by using the pilot carrier. However, the pilot carrier cannot be used in some cases if there is no corresponding reference signal. In that case, not only the general pilot carrier but also a referable signal may be used to correct the frequency error.

The present invention is not limited to the above-described embodiment, and various changes may be made, if desired, without departing from the essence or spirit of the invention which can be read from the claims and the entire specification. A receiving apparatus and a receiving method, which involve such changes, are also intended to be within the technical scope of the present invention.

Industrial Applicability

The receiving apparatus and the receiving method of the present invention can be applied to a receiving apparatus for and a receiving method of receiving a packet signal based on an OFDM (Orthogonal Frequency Division Multiplexing) modulation method or the like, for example.

**Claims**

1. A receiving apparatus for receiving a packet signal having a precedent signal for synchronization establishment and a data body portion, which follows the precedent signal, in which data is carried by a carrier wave, and which includes a particular wave with a particular frequency, said receiving apparatus comprising:

    a first correcting device for performing first correction on the packet signal, the first correction correcting a frequency error on a time axis on the basis of a frequency error of the precedent signal;
    a demodulating device for demodulating the packet signal on which the first correction is performed, to a demodulated signal on a frequency axis, in each carrier wave;

a second correcting device for performing second correction on the demodulated signal, the second correction correcting a frequency error on a frequency axis by using the particular wave; and

a control signal generating device for generating a second correction control signal, which is an index of execution frequency of the second correction, in accordance with scattering of the frequency error of the precedent signal, said second correcting device making the execution frequency of the second correction variable, on the basis of the generated second correction control signal.

2. The receiving apparatus according to claim 1, further comprising a controlling device for controlling said second correcting device so as to make the execution frequency of the second correction variable on the basis of the generated second correction control signal.

3. The receiving apparatus according to claim 1, further comprising:

a switch device for outputting the demodulated signal through said second correcting device or not through said second correcting device, selectively; and

a controlling device for controlling said switch device so as to make the execution frequency of the second correction variable on the basis of the generated second correction control signal.

4. The receiving apparatus according to claim 1, wherein said control signal controlling device includes a detecting device for detecting scattering of the frequency error and generates the second correction control signal in accordance with the detected scattering.

5. The receiving apparatus according to claim 1, wherein said first correcting device calculates a plurality of multiplied data from complex multiplication of the precedent signal and a delay signal obtained by delaying the precedent signal, obtains an average value of a data row, cut by a time window with a length corresponding to m data (wherein m is a natural number), out of the plurality of multiplied data, and detects the frequency error on the basis of the average value, and said control signal generating device obtains an average value of data, cut by a time window with a length corresponding to n data (wherein n is a natural number), out of the plurality of multiplied data, and detects scattering of the average value as scattering of the frequency error.

6. The receiving apparatus according to claim 1, wherein said first correcting device calculates a plurality of multiplied data from complex multiplication of the precedent signal and a delay signal obtained by delaying the precedent signal, obtains an average value of a data row, cut by a time window with a length corresponding to m data (wherein m is a natural number), out of the plurality of multiplied data, and detects the frequency error on the basis of the average value, and said control signal generating device detects scattering of the average value as scattering of the frequency error.

7. The receiving apparatus according to claim 1, wherein said control signal generating device detects scattering of the frequency error, on the basis of a signal length of the received packet signal.

8. A receiving method of receiving a packet signal having a precedent signal for synchronization establishment and a data body portion, which follows the precedent signal, in which data is carried by a carrier wave, and which includes a particular wave with a particular frequency, said receiving method comprising:

a first correcting process of performing first correction on the packet signal, the first correction correcting a frequency error on a time axis on the basis of a frequency error of the precedent signal;

a demodulating process of demodulating the packet signal on which the first correction is performed, to a demodulated signal on a frequency axis, in each carrier wave;

a second correcting process of performing second correction on the demodulated signal, the second correction correcting a frequency error on a frequency axis by using the particular wave; and

a control signal generating process of generating a second correction control signal, which is an index of execution frequency of the second correction, in accordance with scattering of the frequency error of the precedent signal, said second correcting process making the execution frequency of the second correction variable, on the basis of the generated second correction control signal.

[FIG. 1]

[FIG. 2]

EP 1 768 289 A1

| t1 | t2 | t3 | t4 | t5 | t6 | t7 | t8 | t9 | t10 | GI2 | T1 | T2 | GI | SIGNAL | GI | Data 1 | GI | Data 2 |

Short symbol

Long symbol

Information about RATE, LENGTH ,etc. (SIGNAL)

data

Preamble signal :
known fixed pattern signal (signal for synchronization establishment)

[FIG. 3]

Pilot carrier

Sub carrier number

-26   -21   -7   0 (DC)   7   21   26

[FIG. 4]

13

Scattering calculation circuit

13a

SI

N sample
averaging

13b

Scattering
checker

S2

SQ

13c

M sample
averaging

13d

Optimal
value
selection

ΔQ

ΔI

[FIG. 5]

113

| variance | 2nd correction frequency |
|----------|--------------------------|
| 0 | 0 |
| 1 | 4 |
| 2 | 6 |
| ⋮ | ⋮ |
| △△△ | ✕✕✕ |

[FIG. 6]

```
                        ( Start )
                            │
                            ▼
        S10 ┌─────────────────────────┐
            │   Receive OFDM signal   │
            └─────────────────────────┘
                            │
              ┌─────────────┴─────────────┐
              ▼                           ▼
  S12 ┌──────────────────┐    S11 ┌──────────────────┐
      │ Generate second  │        │  First correction│◄─────────┐
      │ correction control│       └──────────────────┘          │
      │    signal S2     │                 │                    │
      └──────────────────┘                 │                    │
              │                            │                    │
              └─────────────┬──────────────┘                    │
                            ▼                                    │
              S13 ┌──────────────────┐                          │
                  │       FFT        │                          │
                  └──────────────────┘                          │
                            │                                    │
                            ▼                                    │
              S14    ◇───────────────◇    No                     │
                    < Second correction? >──────────┐           │
                     ◇───────────────◇              │           │
                            │ Yes                    ▼           │
              S15 ┌──────────────────┐   S17 ┌──────────────────┐│
                  │  Change switch to│       │ Change switch to ││
                  │ second correcting│       │    a bypass      ││
                  │   device side    │       └──────────────────┘│
                  └──────────────────┘              │            │
                            │                        │            │
              S16 ┌──────────────────┐               │            │
                  │ Second correction│               │            │
                  └──────────────────┘               │            │
                            │◄──────────────────────┘            │
                            ▼                                    │
              S18    ◇───────────────◇    No                     │
                    <    Received      >─────────────────────────┘
                    <    symbol        >
                    <    ended?        >
                     ◇───────────────◇
                            │ Yes
                            ▼
                        (  End  )
```

[FIG. 7]

16

Scattering calculation circuit

16a

SI → N sample averaging

SQ

16b

Scattering checker → S2

16c

optimal value selection

ΔQ    ΔI

## INTERNATIONAL SEARCH REPORT

| International application No. |
| --- |
| PCT/JP2005/010938 |

### A. CLASSIFICATION OF SUBJECT MATTER
Int.Cl$^7$ H04J11/00

According to International Patent Classification (IPC) or to both national classification and IPC

### B. FIELDS SEARCHED

Minimum documentation searched (classification system followed by classification symbols)
Int.Cl$^7$ H04J11/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2003-333009 A (KDDI Corp.), 21 November, 2003 (21.11.03), Full text; all drawings & US 2003/0210646 A1 | 1-8 |
| A | JP 2001-223662 A (Kabushiki Kaisha Kyocera DDI Mirai Tsushin Kenkyusho), 17 August, 2001 (17.08.01), Fig. 1 (Family: none) | 1-8 |
| A | JP 2000-165341 A (Nippon Telegraph And Telephone Corp.), 16 June, 2000 (16.06.00), Figs. 2, 5 (Family: none) | 1-8 |

☒ Further documents are listed in the continuation of Box C.   ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 07 September, 2005 (07.09.05) | 27 September, 2005 (27.09.05) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2005/010938 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-286820 A  (Nippon Telegraph And Telephone Corp.), 13 October, 2000 (13.10.00), Figs. 1, 4 & JP 3583013 B2 | 1-8 |
| A | JP 2001-053712 A  (Nippon Telegraph And Telephone Corp.), 23 February, 2001 (23.02.01), Figs. 3 to 8 & JP 3584794 B2 | 1-8 |
| A | JP 09-224062 A  (Matsushita Electric Industrial Co., Ltd.), 26 August, 1997 (26.08.97), Par. No. [0043] & JP 3377905 B2 | 1-8 |
| A | JP 2002-217783 A  (Sanyo Electric Co., Ltd.), 02 August, 2002 (02.08.02), Par. Nos. [0030], [0086] to [0088], [0091], [0106] to [0108] & JP 3583993 B2 | 1-8 |
| A | JP 2000-502554 A  (Motorola, Inc.), 29 February, 2000 (29.02.00), Claim 6; page 10, lines 1 to 13 & JP 3492705 B        & US 5767738 A1 & WO 98/018202 A1       & FI 981309 A & CA 2238329 A        & BR 9706879 A & CN 1206514 A        & FI 981309 A0 | 1-8 |
| A | JP 2001-352231 A  (Matsushita Electric Industrial Co., Ltd.), 21 December, 2001 (21.12.01), Par. Nos. [0052], [0055], [0057] (Family: none) | 1-8 |
| A | JP 2003-309491 A  (Matsushita Electric Industrial Co., Ltd.), 31 October, 2003 (31.10.03), Par. No. [0055] (Family: none) | 1-8 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001223662 A

- JP 2003333009 A